# EUROPÄISCHE PATENTSCHRIFT

(11) **EP 0 491 153 B1**
(45) Veröffentlichungstag und Bekanntmachung des Hinweises auf die Patenterteilung: **20.07.1994**
(21) Anmeldenummer: 91119125.2
(22) Anmeldetag: 11.11.1991
(51) Int. Cl.: B23B 31/02, B23B 51/10

(54) **Halter für einen Bohrer**
Holder for a drill
Porte-outil pour un fôret

(30) Priorität: 19.12.1990 DE 4040774
(43) Veröffentlichungstag der Anmeldung: 24.06.1992
(73) Patentinhaber: SFS Industrie Holding AG, 9435 Heerbrugg (CH)
(72) Erfinder: Patsch, Werner, FL-9490 Vaduz (FI); Göldi, Michael, CH-9450 Altstätten (CH)
(74) Vertreter: Ludescher, Hans

(56) Entgegenhaltungen:
- WO-A-82/04209
- DE-A- 3 507 684
- US-A- 2 162 284

## Beschreibung

Die Erfindung betrifft einen Halter mit eingespanntem Bohrer, mit einer einem Bohrerschaft entsprechenden Bohrung in einem vorderen Endbereich des Halters, die in eine Öfffnung im hinteren Endbereich des Halters übergeht, in welcher ein Antriebsabschnitt des Bohrers verdrehsicher gehalten ist, wobei der Halter an seiner Hinterseite verdrehfest mit einem Antriebsteil verbindbar ist.

Ein bekannter Halter dieser Art (DE-30 33 322 A1) ist für einen Bohrer vorgesehen, bei dem der Querschnitt des Kopfes quadratisch und kleiner als der Querschnitt des Bohrerschaftes ist. Der die Bohrung enthaltende vordere Endbereich des Halters ist mit mehreren Schlitzen versehen, damit sich der vordere Endbereich zum Verengen der Bohrung wie ein Spannfutter von aussen zusammendrücken lässt, um dadurch den Bohrer in der Bohrung gegen Drehung festzuhalten und am Austreten aus der Bohrung zu hindern. Die sich an die Bohrung anschliessende Öffnung ist als radial durchgehender Schlitz mit zwei Eingriffsflächen zur Anlage am vierkantigen Antriebsabschnitt des Bohrers ausgebildet, um eine ordnungsgemässe Drehmitnahme des Bohrers zu gewährleisten. Der vordere Endbereich des Halters ist aussen konisch ausgebildet, damit die Bohrung beim Einschrauben des Halters in die Spindel einer Bohrmaschine verengt und der Bohrer so radial eingespannt wird. Der Bohrer wird von der Vorderseite des Halters aus in diesen eingesteckt. Die Einstecktiefe wird dabei durch eine Stellschraube festgelegt, die von der Hinterseite des Halters her mehr oder weniger tief in diesen einschraubbar ist. Der als Mehrbackenfutter ausgebildete, bekannte Halter hat notwendigerweise einen konstruktiv aufwendigen Aufbau, um die Forderungen nach achsgenauer Ausrichtung des Bohrers und ordnungsgemässer Drehmitnahme desselben erfüllen zu können.

Die vorliegende Erfindung hat sich zur Aufgabe gestellt, einen Halter der eingangs genannten Art zu schaffen, bei welchem die Forderungen nach achsgenauer Ausrichtung und ordnungsgemässer Drehmitnahme bezüglich des Antriebsabschnittes des Bohrers auf konstruktiv einfachere Weise erfüllt werden sollen.

Erfindungsgemäss wird dazu bei einem Halter der eingangs genannten Art vorgeschlagen, dass der Halter als eine Hülse ausgebildet ist, in die der Bohrer von der Hinterseite her einführbar ist, und dass die Öffnung gegenüber der Bohrung vergrössert ist, um den Antriebsabschnitt des Bohrers, der einen gegenüber dem Bohrerschaft vergrösserten Kopf aufweist, aufnehmen zu können.

Durch die erfindungsgemässe Konstruktion des Halters erfolgen die Drehmitnahme des Bohrers und die Fixierung des Bohrers in axialer Richtung gegenüber dem Halter mit Hilfe des in der Öffnung aufgenommenen, vergrösserten Kopfes des Antriebsabschnittes des Bohrers. Durch die konstruktiv einfache Ausbildung des Halters nach der Erfindung als eine Hülse, welche eine Durchgangsbohrung für den Bohrerschaft und eine vergrösserte und an die Kopfform des Bohrers angepasste Öffnung aufweist, erübrigt sich ein radiales Einspannen des Bohrers, so dass der Halter keinen mit Schlitzen versehenen und als Spannfutter für den Bohrerschaft ausgebildeten Endbereich aufzuweisen braucht. Wenn erfindungsgemäss ein Bohrer in den hülsenförmigen Halter von dessen Hinterseite her eingeführt wird, werden bereits durch die gegenseitige konstruktive Ausbildung von Halter und Bohrer eine achsgenaue Ausrichtung des Bohrers, die Drehmitnahme und gegebenenfalls eine begrenzte axiale Verschiebbarkeit des Bohrers ermöglicht.

Vorteilhafte Ausgestaltungen der Erfindung bilden die Gegenstände der Unteransprüche.

Ausführungsbeispiele der Erfindung werden in der nachstehenden Beschreibung anhand der Zeichnung näher erläutert. Es zeigen:
- Fig. 1: eine Seitenansicht eines Bohrers;
- Fig. 2: einen Schnitt nach der Linie II-II in Fig. 1;
- Fig. 3: geschnitten dargestellt ein erstes Ausführungsbeispiel eines hülsenförmigen Halters für einen Bohrer der in Fig. 1 dargestellten Art;
- Fig. 4: ein zweites Ausführungsbeispiel des Halters mit eingesetztem Bohrer.

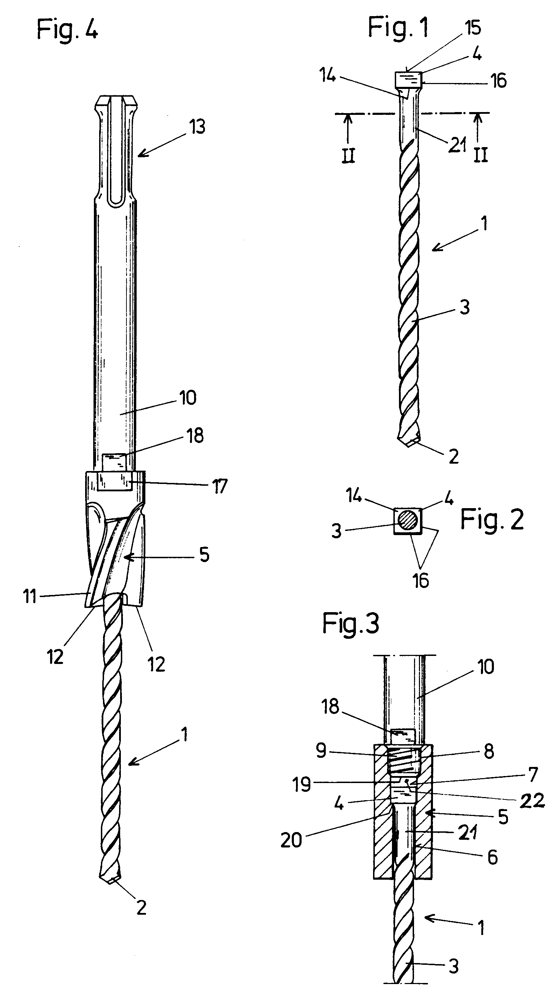

Fig. 1 zeigt ein Ausführungsbeispiel eines Bohrers 1, für den ein im folgenden beschriebener und in zwei Ausführungsbeispielen in den Fig. 3 und 4 dargestellter Halter 5 vorgesehen ist. Der Bohrer 1 hat eine Bohrspitze 2, einen Bohrerschaft 3 und einen gegenüber dem Bohrerschaft 3 vergrösserten Kopf 4, welcher einen in den Halter 5 einsetzbaren Antriebsabschnitt bildet.

Der Kopf weist wenigstens eine zur Bohrerachse parallel verlaufende Abflachung 16 auf, welche zur Drehmitnahme im Halter 5 dient. Bei der gezeigten Ausführungsform ist der Kopf 4 im Querschnitt quadratisch ausgeführt, so dass vier solcher Abflachungen 16 vorgesehen sind. Der Kopf 4 des Bohrers 1 kann im Querschnitt in jeder beliebigen Art mehreckig geführt sein. An sich wäre auch eine unrunde, also z.B. ellipsenförmige Querschnittsform des Kopfes 4 denkbar, doch sind dann die Herstellung und die Passung zum entsprechenden Halter 5 wesentlich schwieriger zu bewerkstelligen.

Der unmittelbar an den Kopf 4 anschliessende Schaftabschnitt 21 des Bohrers 1 ist zur achsgenauen Ausrichtung desselben im Halter 5 ausgeführt. Es werden somit zum Halten des Bohrers 1 im Halter der relativ kleine Kopf 4 und zur Ausrichtung des Bohrers der an den Kopf 4 anschliessende Schaftabschnitt 21 herangezogen. Daher sind eine ordnungsgemässe Drehmitnahme und eine ordnungsgemässe axiale Ausrichtung des Bohrers 1 gewährleistet.

Die in axialer Richtung voneinander abgewandten Enden 14 und 15 des Kopfes 4 sind als Anschlagflächen zur axialen Bewegungsbegrenzung des Bohrers 1 in einer Öffnung 7 des Halters 5 ausgebildet.

In Fig. 3 ist der Halter 5 im Schnitt dargestellt. Dieser Halter 5 ist hülsenförmig ausgebildet und weist in seinem vorderen Endbereich eine dem Schaftabschnitt 21 entsprechende Bohrung 6 auf. In seinem hinteren Endbereich ist diese Bohrung 6 zur Öffnung 7 erweitert, in welcher der Kopf 4 des Bohrers 1 verdrehsicher und gegebenenfalls axial verschiebbar gehalten ist. Die Öffnung 7 im Halter 5 entspricht im Querschnitt dem Querschnitt des Kopfes 4, so dass der Bohrer 1 im Halter 5 verdrehsicher gehalten wird. Durch die relativ lange Bohrung 6 ist der Schaftabschnitt 21 des Bohrers 1 über einen relativ langen Bereich geführt, so dass bezüglich des Halters 5 eine exakte axiale Ausrichtung des Bohrers 1 gewährleistet ist. Der hülsenförmige Halter 5 weist an seinem von der Bohrung 6 abgewandten hinteren Ende eine Gewindebohrung 8 auf, in welche ein Gewindezapfen 9 eines Antriebsteils 10 eindrehbar ist. Durch entsprechende Schlüsselangriffsstellen 17 und 18 am Antriebsteil 10 und am Halter 5 ist eine feste Verbindung zwischen dem Halter 5 und dem Antriebsteil 10 gewährleistet.

Bei der in Fig. 3 dargestellten Ausführungsform ist der Bohrer 1 gegenüber dem Halter 5 begrenzt axial verschiebbar gehalten. Zu diesem Zweck ist die Öffnung 7 in axialer Richtung länger ausgebildet als die axiale Länge des Kopfes 4. Da der Schaftabschnitt 21 und auch der Kopf 4 nicht radial eingespannt sind, kann sich der Bohrer 1 somit in der Öffnung 7 bewegen, so dass die in axialer Richtung voneinander abgewandten Enden 14 und 15 des Kopfes 4 als Anschlagflächen für die axiale Bewegungsbegrenzung dienen. Im Halter 5 ist am Übergang zwischen der Öffnung 7 und der Bohrung 6 eine Schulter 20 als Anschlagfläche vorgesehen, und auf der gegenüberliegenden Seite bildet das freie Ende 19 des Gewindezapfens 9 des Antriebsteils 10 die Anschlagfläche.

Bei einer in axialer Richtung gesehen entsprechend kürzeren Öffnung 7 kann das Ende 19 des Gewindezapfens 9 auch direkt auf dem oberen Ende 15 des Kopfes 4 aufliegen, so dass der Bohrer 1 fest eingespannt wird. Um den gleichen Halter 5 sowohl bei begrenzt axialer Verschiebbarkeit als auch bei festem Einspannen verwenden zu können, ist zwischen dem Ende 19 und dem Ende 15 des Kopfes 4 ein entsprechender Zwischenbolzen 22 einsetzbar.

Die Verbindung zwischen dem Halter 5 und dem Antriebsteil 10 kann auf verschiedene Art und Weise erfolgen. So wäre es auch denkbar, anstelle des Gewindezapfens 9 und der Gewindebohrung 8 eine Art Bajonettverschluss, eine Steckverbindung mit Einrastelementen usw. vorzusehen.

Bei allen diesen Ausführungen wird der Bohrer 1 also von der Hinterseite des Halters 5 her eingeführt, und es bedarf daher für den Bohrer 1 selbst keiner radialen Verspannung. Es ist eine ausreichende Drehmitnahme gewährleistet und auch die Möglichkeit geboten, bei Bedarf eine begrenzt axiale Verschiebbarkeit zu bewerkstelligen. Dies ist insbesondere dann notwendig, wenn der Bohrer als Schlagbohrwerkzeug eingesetzt wird. Bei einem Schlagbohrer ist es sinnvoll, eine geringfügige axiale Verschiebbarkeit des Bohrers vorzusehen.

Bei der Ausführung nach Fig. 4 ist der Halter 5 als eine Art Bohrteil ausgeführt, der mit radial auskragenden Bohrschneiden 12 und daran anschliessenden Schneidstegen 11 versehen ist. Der Halter 5 ist hier also zugleich als ein zweiter Bohrerabschnitt ausgebildet, so dass eine abgestufte Bohrung mit auf den Bohrer 1 folgendem grösserem Durchmesser herstellbar ist. Fig. 4 ist auch zu entnehmen, dass der Antriebsteil 10 in eine handelsübliche Aufnahme an einer Bohrmaschine eingesetzt werden kann. Es ist aber auch möglich, dass der Halter 5 direkt in eine Bohrmaschine eingesetzt oder eben auf einen Gewindezapfen einer Bohrmaschine aufgedreht wird.

## Patentansprüche

1. Halter mit eingespanntem Bohrer (1), mit einer einem Bohrerschaft (3, 21) entsprechenden Bohrung (6) in einem vorderen Endbereich des Halters (5), die in eine Öffnung (7) im hinteren Endbereich des Halters (5) übergeht, in welcher ein Antriebsabschnitt des Bohrers (1) verdrehsicher gehalten ist, wobei der Halter (5) an seiner Hinterseite verdrehfest mit einem Antriebsteil (10) verbindbar ist, **dadurch gekennzeichnet,** dass der Halter (5) als eine Hülse ausgebildet ist, in die der Bohrer (1) von der Hinterseite her einführbar ist, und dass die Öffnung (7) gegenüber der Bohrung (6) vergrössert ist, um den Antriebsabschnitt des Bohrers (1), der einen gegenüber dem Bohrerschaft (3, 21) vergrösserten Kopf (4) aufweist, aufnehmen zu können.

2. Halter nach Anspruch 1, dadurch gekennzeichnet, dass die Öffnung (7) zur Drehmitnahme des Antriebsabschnittes des Bohrers (1) wenigstens eine zumindest annähernd achsparallel verlaufende Abflachung aufweist.

3. Halter nach Anspruch 1 oder 2, dadurch gekennzeichnet, dass die Öffnung (7) im Querschnitt mehreckig ausgeführt ist.

4. Halter nach Anspruch 3, dadurch gekennzeichnet, dass die Öffnung (7) im Querschnitt quadratisch ausgeführt ist.

5. Halter nach Anspruch 1 oder 2, dadurch gekennzeichnet, dass die Öffnung (7) im Querschnitt unrund, z.B. ellipsenförmig, ausgeführt ist.

6. Halter nach einem der Ansprüche 1 bis 5, dadurch gekennzeichnet, dass er an seinem von der Bohrung (6) abgewandten Ende eine Gewindebohrung (8) aufweist, in welche ein Gewindezapfen (9) des Antriebsteils (10) eindrehbar ist.

7. Halter nach einem der Ansprüche 1 bis 5, dadurch gekennzeichnet, dass zur Verbindung zwischen dem Halter (5) und dem Antriebsteil (10) eine Steckverbindung mit Einrastelementen, z.B. nach Art eines Bajonettverschlusses, vorgesehen ist.

8. Halter nach Anspruch 6 oder 7, dadurch gekennzeichnet, dass am Antriebsteil (10) und am Halter (5) Schlüsselangriffsstellen (17, 18) ausgebildet sind.

9. Halter nach einem der Ansprüche 1 bis 8, dadurch gekennzeichnet, dass die Öffnung (7) in axialer Richtung länger ausgebildet ist als die axiale Länge des Kopfes (4).

10. Halter nach Anspruch 9, gekennzeichnet durch einen über dem Kopf (4) einsetzbaren Zwischenbolzen (22).

11. Halter nach einem der Ansprüche 1 bis 10, dadurch gekennzeichnet, dass am Übergang zwischen der Öffnung (7) und der Bohrung (6) eine Schulter (20) als Anschlagfläche vorgesehen ist.

12. Halter nach einem der Ansprüche 1 bis 11, dadurch gekennzeichnet, dass der Halter (5) als eine Art Bohrteil ausgeführt ist, der mit radial auskragenden Bohrschneiden (12) und daran anschliessenden Schneidstegen (11) versehen ist.

## Claims

1. A holder in which a drill (1) is clamped, having a bore (6) in a front end region of the holder (5), which bore corresponds to a drill shank (3, 21) and which merges into an opening (7) in the rear end region of the holder (5), in which opening a drive portion of the drill (1) is retained in a manner precluding independent rotation, it being possible for the holder (5) to be connected at its rear end in a manner precluding independent rotation with a drive member (10), characterised in that the holder (5) is in the form of a sleeve into which the drill (1) can be inserted from the rear end, and in that the opening (7) is enlarged in relation to the bore (6) so as to be able to accommodate the drive portion of the drill (1) which has an enlarged head (4) in relation to the drill shank (3, 21).

2. A holder according to Claim 1, characterised in that for the rotational engagement of the drive portion of the drill (1) the opening (7) has at least one flattened portion extending at least approximately axially parallel.

3. A holder according to Claim 1 or 2, characterised in that the opening (7) is of polygonal cross-section.

4. A holder according to Claim 3, characterised in that the opening (7) is of square cross-section.

5. A holder according to Claim 1 or 2, characterised in that the opening (7) is non-circular, for example elliptical, in cross-section.

6. A holder according to any one of Claims 1 to 5, characterised in that at its end remote from the bore (6) it has a threaded bore (8) into which a threaded spigot (9) of the drive member (10) can be screwed.

7. A holder according to any one of Claims 1 to 5, characterised in that a plug-and-socket connection with engagement elements, for example in the manner of a bayonet catch, is provided to effect the connection between the holder (5) and the drive member (10).

8. A holder according to Claim 6 or 7, characterised in that spanner application points (17, 18) are formed on the drive member (10) and on the holder (5).

9. A holder according to any one of Claims 1 to 8, characterised in that the opening (7) is longer in the axial direction than the axial length of the head (4).

10. A holder according to Claim 9, characterised by an intermediate plug (22) which can be inserted over the head (4).

11. A holder according to any one of Claims 1 to 10, characterised in that a shoulder (20) is provided as an abutment surface at the transition between the opening (7) and the bore (6).

12. A holder according to any one of Claims 1 to 11, characterised in that the holder (5) is in the form of a type of drill member which is provided with radially projecting cutters (12) and adjoining cutter webs (11).

## Revendications

1. Porte-outil serrant un foret(1) avec un alésage (6) correspondant à une tige de foret (3, 31) dans une zone terminale antérieure du porte-outil (5), qui passe dans un orifice (7) dans la zone terminale arrière du porte-outil (5), dans lequel une partie d'entraînement du foret (1) est maintenue sans pouvoir tourner, ou le porte-outil (5) est susceptible d'être relié sans pouvoir tourner à une pièce d'entraînement (10), caractérisé en ce que le porte-outil (5) est en forme de douille, dans laquelle on peut insérer le foret (1) par l'arrière et que l'orifice (7) est agrandi par rapport à l'alésage (6) pour pouvoir recevoir la partie d'entraînement du foret (1) qui présente une tête (4) agrandie vis-à-vis de la tige du foret (3, 21).

2. Porte-outil selon la revendication 1, caractérisé en ce que l'orifice (7) présente au moins un aplatissement s'étendant au moins approximativement parallèlement à l'axe pour entraîner en rotation la partie d'entraînement du foret (1).

3. Porte-outil selon la revendication 1 ou 2, caractérisé en ce que l'orifice (7) est exécuté en section polygonale.

4. Porte-outil selon la revendication 3, caractérisé en ce que l'orifice (7) est exécuté en section carrée.

5. Porte-outil selon la revendication 1 ou 2, caractérisé en ce que l'orifice (7) est exécuté en section non ronde, par exemple en forme d'ellipse.

6. Porte-outil selon l'une des revendications 1 à 5, caractérisé en ce qu'il présente un alésage fileté (8) à son extrémité opposée à l'alésage (6), dans lequel on peut visser un tourillon fileté (9) de la pièce d'entraînement (10).

7. Porte-outil selon l'une des revendications 1 à 5, caractérisé en ce qu'on prévoit pour la liaison entre le porte-outil (5) et la pièce d'entraînement (10) un raccord d'enfichage avec élément de verrouillage, par exemple du type de fermeture à baïonnette.

8. Porte-outil selon la revendication 6 ou 7, caractérisé en ce que sur la pièce d'entraînement (10) et sur le porte-outil (5) sont formées des prises de verrouillage (17, 18).

9. Porte-outil selon l'une des revendications 1 à 8, caractérisé en ce que l'orifice (7) est exécuté en sens axial plus long que la longueur axiale de la tête (4).

10. Porte-outil selon la revendication 9, caractérisé par un goujon intermédiaire (22) insérable au-dessus de la tête (4).

11. Porte-outil selon l'une des revendications 1 à 10, caractérisé en ce qu'on prévoit à la transition entre l'orifice (7) et l'alésage (6) un épaulement (20) comme surface d'appui.

12. Porte-outil selon l'une des revendications 1 à 11, caractérisé en ce que le porte-outil (5) est exécuté comme une sorte de pièce de perçage qui est munie de couteaux de perçage (12) s'écartant radialement et de nervures coupantes (11) s'y raccordant.
